# EUROPEAN PATENT SPECIFICATION

(11) **EP 1 627 560 B1**
(45) Date of publication and mention of the grant of the patent: **19.09.2007**
(21) Application number: 05255093.6
(22) Date of filing: 17.08.2005
(51) Int. Cl.: A01D 34/00

(54) **A lawnmower**
Ein Rasenmäher
Une tondeuse à gazon

(30) Priority: 20.08.2004 GB 0418647
(43) Date of publication of application: 22.02.2006
(73) Proprietor: Husqvarna UK Limited, County Durham, DL5 6UP (GB)
(72) Inventor: Coates, Neil A., County Durham TS21 3AX (GB); Smith, Ian Z., Yorkshire Y07 2LJ (GB); Gobin, Barry, County Durham DH6 6SA (GB)
(74) Representative: Pratt, David Martin

(56) References cited:
- DE-A1- 3 120 426
- DE-A1- 4 002 598
- DE-U1- 20 007 388
- GB-A- 2 063 635

## Description

The invention relates to a lawnmower.

A known lawnmower comprises a handle connected to a shell (or deck) in which a rotatable cutting blade is arranged, the cutting blade being rotatable about an upright axis and being driven by a motor on top of the deck. The lawnmower has ground-engaging wheels at each end of the deck. The handle is U-shaped and is attached to the deck at each end. The handle includes a respective joint part-way along each limb, so that the distal part of the handle can be folded towards the deck to make the lawnmower more compact for storage or transport.

Another known lawnmower is of similar construction, but does not have wheels. Instead, an impeller is arranged within the deck to cause the lawnmower to hover above the ground.

A further known lawnmower utilises a horizontally-mounted cutting cylinder that has a plurality of blades on its periphery. Rotation of the cylinder brings the blades into close contact with a fixed bottom blade resulting in a shearing effect that is used to cut grass. This type of machine is usually supported on wheels or rollers.

When the lawnmower is put away, for example in a shed, it may carry grass on the cutting blade, on the wheels or on the underside of the deck, and this grass may fall from the lawnmower onto the floor either straightaway or later as the cut grass dries. This is untidy. Moreover, the cut grass carried by the lawnmower, or dropped by it, may compost and consequently emit an unpleasant smell.

The lawnmower may be stored in its normal orientation on the floor, or it may be hung up by the handle so that it takes up less space. In this position, however, the cutting blade may be exposed and could cut someone.

DE 200 07 388 U describes a lawnmower provided with a bottom plate for converting the lawnmower for use as a scarifier, the bottom plate being provided with power take-off means for transmitting power from the lawnmower motor to the scarifier.

The present invention provides a lawnmower having a deck which presents an opening to ground datum when the lawnmower is in use, a rotatable cutting member housed within the deck, and a cover that can be positioned substantially to close the deck opening to prevent access to the cutting member during transport and storage of the lawnmower.

In this way, the deck opening of the lawnmower can be closed for transport or storage in a manner that grass will not fall from it. This obviates the need for the lawnmower to be cleaned thoroughly before putting it away, and also facilitates storage of the lawnmower in places where it would not previously have been stored, such as inside a user's home, this is possible because of the reduced potential for grass to be dropped.

Moreover, during transport or storage of the lawnmower, as the deck opening is closed by the cover, access to the cutting member is denied, thereby preventing the possibility of a user cutting himself/herself on the cutting member.

Advantageously, the cover is an integral part of the lawnmower. Preferably, the cover is pivotally attached to part of the lawnmower. Conveniently, the cover is detachably connected to said part of the lawnmower.

In an alternative arrangement, the cover is a separate item.

In either case, the cover and said part of the lawnmower may be provided with interengageable connection means for detachably connecting the cover to the lawnmower for substantially closing the deck opening. Preferably, the deck constitutes said part of the lawnmower.

Preferably, the opening may be formed at the underside of the deck. The cover and the deck may thus define an enclosure therebetween. The enclosure can be used to store items such as an instruction manual or other literature that is normally supplied with a lawnmower.

The lawnmower may be of the type which does not include a grass collection receptacle. In a preferred embodiment, however, the lawnmower further comprises a grass collection receptacle. Preferably, the grass collection receptacle is arranged to be stored in the enclosure. The grass collection receptacle may be rigid, but preferably it comprises a bag. The bag can thus be collapsed when empty to facilitate storage in the enclosure.

In a preferred embodiment, the cover forms part of the grass collection receptacle. In this case, the cover and a bag constitute the grass collection receptacle, the bag being arranged to be stored in the enclosure.

The lawnmower may be driven in any suitable manner and may be a petrol driven lawnmower. Preferably, however, the lawnmower is an electric lawnmower. In this case, the lawnmower further comprises an electric supply cable which is arranged to be stored in the enclosure. Conveniently, the cover is provided with retention means for retaining the cable. Preferably, the retention means is constituted by at least one projection on the cover, the arrangement being such that the cable can be stored in the enclosure as a coil supported by the or each projection.

Alternatively, the cable is stored on the cover outside the enclosure. In this case, the retention means is constituted by a drum that can rotate relative to the cover, whereby the supply cable can be wound onto the drum by the simple action of rotating the drum.

In a preferred embodiment, the lawnmower further comprises a handle for pushing the lawnmower along. Preferably, the lawnmower is such that it can be arranged in a storage position in which at least part of the handle can be adjusted to lie adjacent to the cover. Alternatively, the lawnmower is such that it can be arranged in a storage position in which at least part of the handle is located in a recess formed in the cover. The lawnmower may also be such that it can be arranged in a storage position in which at least part of the handle is stored within the enclosure. Preferably, the lawnmower is such that it can be arranged in a storage position in which at least the majority of the handle is stored within the enclosure. Conveniently, the handle is telescopically mounted on the lawnmower.

Preferably, the lawnmower further comprises retention means for retaining the handle in an extended condition, for retaining the handle in at least one condition in which it is not fully extended, and for retaining the handle in the fully retracted condition.

The cover may take any suitable form and may comprise a continuous web. The cover may be arranged to cover the whole of the deck opening, so that no cut grass can escape. In a preferred embodiment, the cover is arranged to seal the deck opening. Where the deck is continuous and the cover seals the deck opening, the region surrounding the cutting member is entirely enclosed so that, not only can no grass escape, but also trapped grass inside the enclosure will be sealed in. Consequently, if the trapped grass should compost, which would result in an unpleasant smell, the smell will not escape from the enclosure. This also makes the lawnmower suitable for storage, for example, in someone's home; for, as well as not dropping grass, it also will not allow unpleasant smells from composting grass to escape into the home.

The cover may take any suitable form and may be a flexible cover, but preferably the cover is a rigid cover. The cover may be dished. This may create extra volume inside the enclosure for storage.

Means, such as a latch, is preferably provided to retain the cover in the storage position.

As mentioned above, the cover may be a separate item from the remainder of the lawnmower, but preferably is connected to the remainder of the lawnmower. Preferably, the cover is movable between a first position in which it covers at least part of the deck opening, and a second position in which the lawnmower can be used for cutting grass. The cover may be movable in any suitable way, and may be pivotable between the first and second positions. In this way, when grass cutting is finished, the cover can simply be swung into the storage position where it will prevent grass from falling from the lawnmower, and/or prevent access to the cutting member.

The cover may conveniently lie behind the lawnmower in the second position.

The lawnmower may be waterproof. In particular, where the deck is continuous and the cover is continuous and seals against the deck, no water can gain ingress to the enclosure, so that the parts within the enclosure stay dry. It also means that the lawnmower can be stored outside, and so storage space does not have to be found for it elsewhere.

The lawnmower may include additional handle means by which to transport the lawnmower, or to hang the lawnmower when it is being stored. Thus, the lawnmower can be moved between a lawn and a storage position by the additional handle means. It can also be picked up by the additional handle means and carried, and/or may be hung from the additional handle means in order to be stored. The additional handle means may be provided on the deck or on the cover, but conveniently is on the cover.

Preferably, the cover has a substantially flat external surface. This facilitates storage of the lawnmower on a flat surface such as the floor of a shed or garage.

The invention will now be described in greater detail, by way of example, with reference to the drawings, in which:
Figure 1 is a front perspective view of a first form of lawnmower constructed according to the invention, the lawnmower being shown in the in use position.
Figure 2 is a rear perspective view of the lawnmower of Figure 1 in the in use position;
Figure 3 is a rear perspective view of the lawnmower of Figure 1, shown partly pivoted towards the storage position;
Figure 4 is a rear perspective view of the lawnmower of Figure 1, shown pivoted further towards to storage position;
Figure 5 is a rear perspective view of the lawnmower of Figure 1, shown in the storage position;
Figure 6 is a front perspective view of the lawnmower of Figure 1, shown in the storage position;
Figure 7 is a front perspective view of the lawnmower of Figure 1, shown in the storage position in an understairs cupboard in a home;
Figure 8 shows the lawnmower of Figure 1, shown in the storage position whilst being carried out for use;
Figure 9 shows the lawnmower of Figure 1 with the handle extended ready for use;
Figure 10 is a front perspective view of the lawnmower of Figure 1, shown in the in use position;
Figure 11 is a front perspective view of the lawnmower of Figure 1, shown in the in use position as it is used to cut a lawn;
Figure 12 is a front perspective view of a second form of lawnmower constructed according to the invention, the lawnmower being shown in the in use position on a lawn;
Figure 13 is a rear perspective view of the lawnmower of Figure 12, shown in the storage position with its handle extended;
Figure 14 is a view from one side and above of a third form of lawnmower constructed according to the invention, the lawnmower being shown in the in use position; and
Figure 15 is a view from one side and above of the lawnmower of Figure 14, shown in the storage position.

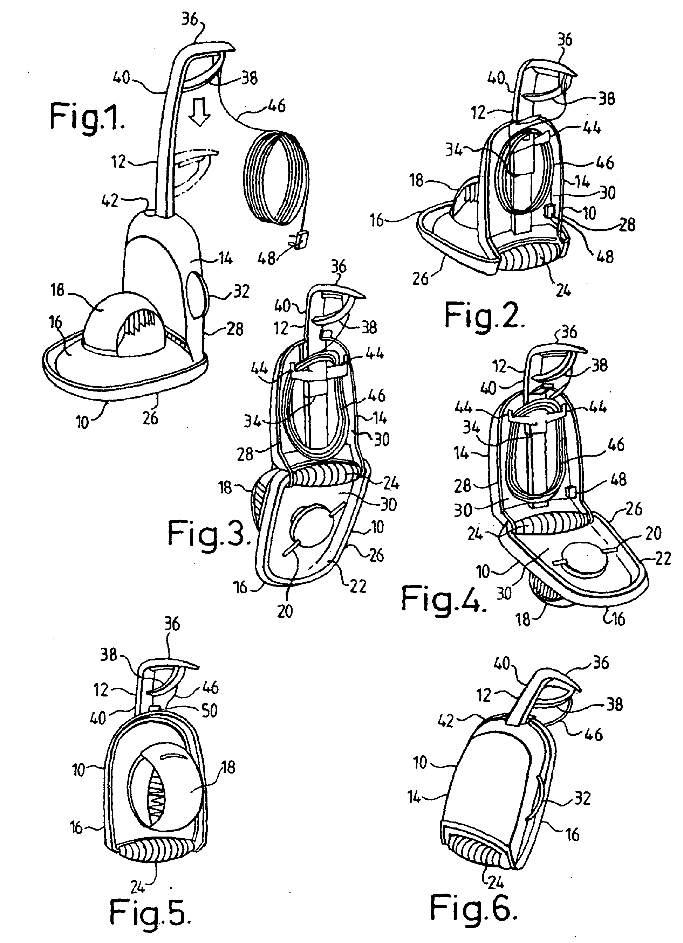

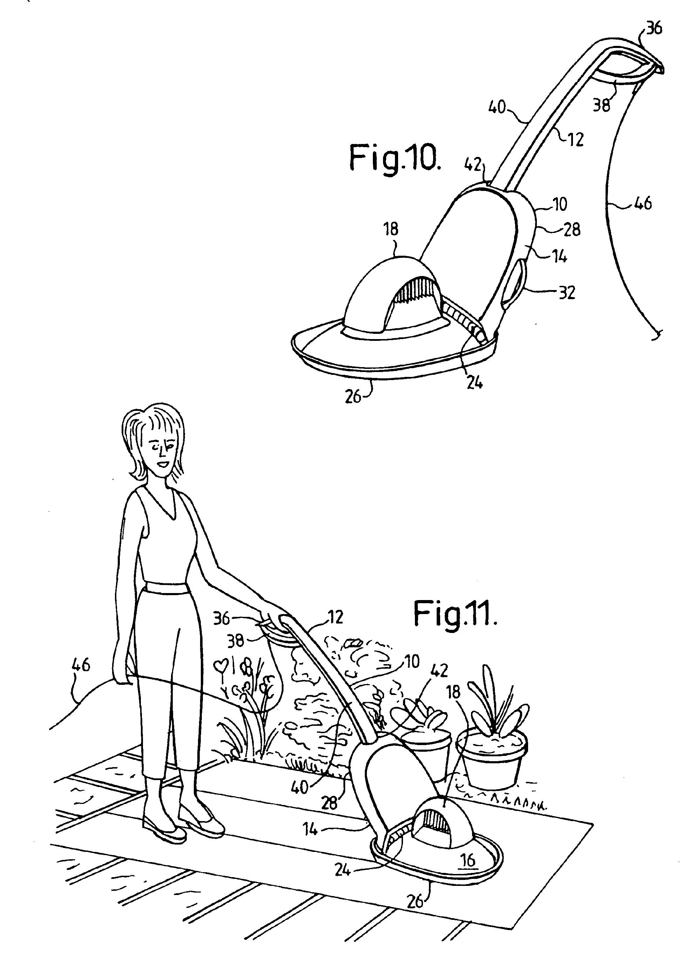

Referring to the drawings, Figure 1 shows a lawnmower 10 having a handle 12, a cover 14, a deck 16 and an electric motor 18 mounted on top of the deck to drive a rotatable cutting blade 20 positioned within the deck. The cutting blade 20 is arranged to rotate about an upright axis when the lawnmower 10 is in use, as shown in Figures 1 and 10 to 13.

The deck 16 has an upwardly-dished shape which defines a downwardly-facing opening 22. The deck 16 is rigid and continuous, and may be made of a plastics material.

A roller 24 is provided at the rear of the deck 16, the roller being wider in the middle than at the ends, so that it is generally ellipsoidal. The roller 24 lies with its rotational axis across the rear of the lawnmower 10, and the rear edge of the deck 16 is shaped to complement the shape of the roller.

The cover 14 is pivoted to the deck 16 about the same axis as the axis of rotation of the roller 24, and the rear edge of the cover is shaped to complement the shape of the roller. The cover 14 is rigid and continuous apart from a handle aperture 42, and may be made of a plastics material. The cover 14 is dished, and is arranged to pivot about the pivot axis at the rear of the deck 16 to lie against the lower edge 26 of the deck which defines the downwardly-facing opening 22. In this position, the upper edge 28 of the cover 14 fits against the lower edge 26 of the deck 16, so that an enclosure 30 is formed between them. The cover 14 is provided with a carrying handle 32 about half-way along one side.

A sleeve 34 is formed within the dishing of the cover 14 towards the end remote from the roller 24. The sleeve 34 is arranged to receive the handle 12, which can slide with respect to the sleeve. Detents (not shown) hold the handle 12 in the fully-extended and fully-retracted positions. The handle 12 is elongate and has a main body 40, the distal end 36 of which is turned rearwards. A further portion 38 forms a loop from the end of the turned part 36 to the main body 40. The main body 40 of the handle 12 has a cross-section which is flattened so that the handle is wider than it is thick. The handle 12 protrudes through the aperture 42 in the cover 14.

Two adjacent hooks 44 are provided, the hooks extending from one end of the sleeve 34, and each being pivotable about an axis parallel to the axis of the sleeve. An electric cable 46, which is provided with a plug 48 for connection to a mains socket, extends from the end of the handle 12 to supply power to the motor 18. The cable 46 can be coiled and hung on the hooks 44, when the hooks are pivoted away from the deck 16. The hooks 44 can then be pivoted to lie alongside the sleeve 34 within the dishing of the cover 14, thereby holding the coiled cable 46 in place.

After use, in order to put the lawnmower 10 in the storage position, the handle 12 is first slid into the sleeve 34 in the cover 14 in telescoping fashion, as shown in Figure 1. The cable 46 is then coiled and hung on the hooks 44, as shown in Figure 2, and the hooks are pivoted into the cover 14, as described above and as shown in Figure 3. The lawnmower 10 is then lifted by the cover 14 so that the deck 16 swings down to hang from it as shown in Fig 3. The deck 16 is then lifted to pivot further in the same direction until the edge 28 of the cover 14 fits against the edge 26 of the deck 16 where it is held in place by a latch 50 on the cover 14 which resiliently clips onto the edge of the deck.

It is seen that, in this storage condition, the lawnmower 10 is much more compact than in the in use position. Also, the cutting blade 20 is protected by the cover 14, so that the cover prevents access to the blade thereby removing the possibility of someone cutting themselves on it. Furthermore, no cut grass adhering to the deck 16 and/or the blade 20 can fall from the lawnmower 10 onto the floor, as any such grass will be retained in the enclosure 30 formed by the cover 14 and the deck 16. Also, any such grass in the enclosure 30 which may compost will not be able to release unpleasant smells because the enclosure is sealed.

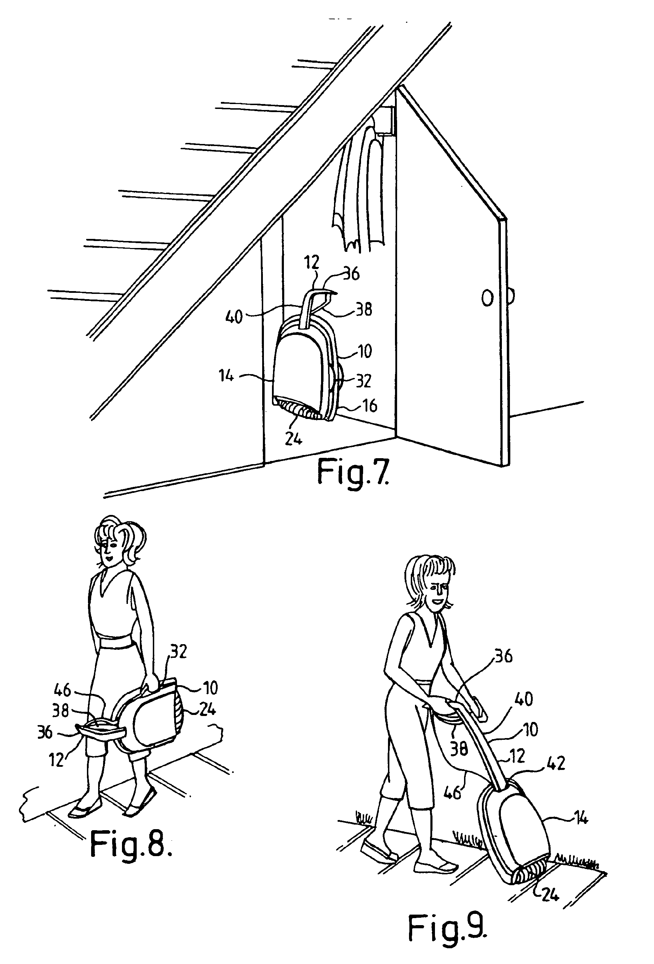

The majority of the cable 46 and the majority of the handle 12 are housed within the enclosure 30 with the blade 20. The lawnmower 10 can be stored and shipped for sale and stored for sale in this form, with no additional packing required. Paperwork, such as instructions for use or a guarantee can be supplied in the enclosure. The plug 48, most of the cable 46 and the blade 20 are all protected from damage within the enclosure 30, and the lawnmower 10 can be handled easily in this form. In particular, the lawnmower 10 can be picked up by the carrying handle 32 and carried on its side, as shown in Fig 8.

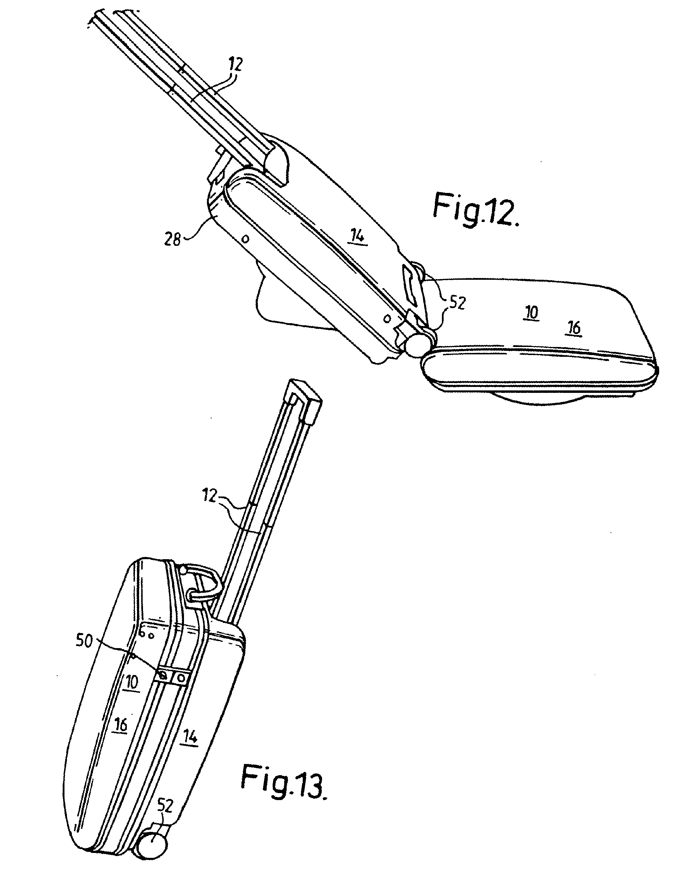

Figure 7 shows the lawnmower 10 stored in an understairs cupboard in a home. When it is desired to use the lawnmower 10, it can be carried out using the carrying handle 32, as shown in Figure 8. It is also possible to extend the handle 12 and push the otherwise compacted lawnmower 10 along on the roller 24. Once outside on the lawn, the cover 14 can be pivoted to put the lawnmower 10 into the in use position, and the plug 48 can then be plugged in so that the lawnmower is ready for use, as shown in Figure 11.

Wheels may be provided in place of the roller 24. In this case, the handle 12 would be used to push the otherwise compacted lawnmower 10 between a lawn and a storage position.

Figures 12 and 13 show the second embodiment. The second embodiment is similar to the first, and only the differences from the first embodiment will be described. The same reference numerals will be used for equivalent features.

In the second embodiment, the motor 18 is provided within the deck 16, and the roller 24 is omitted. The lawnmower 10 has the outward appearance, in the storage position, of a wheeled, hard suitcase with a retractable handle. Thus, the cover 14 and the deck 16 are formed in a similar manner to the two halves of a suitcase. Wheels 52 are provided to take the place of the roller 24 when the lawnmower 10 is rolled along in the compacted condition, the wheels being carried by the cover 14. This lawnmower 10 has a grass collection bag 54, as shown in Figure 12. The bag 54 is mounted on the internal surface of the cover 14, and is in communication with the underside of the deck 16 in use.

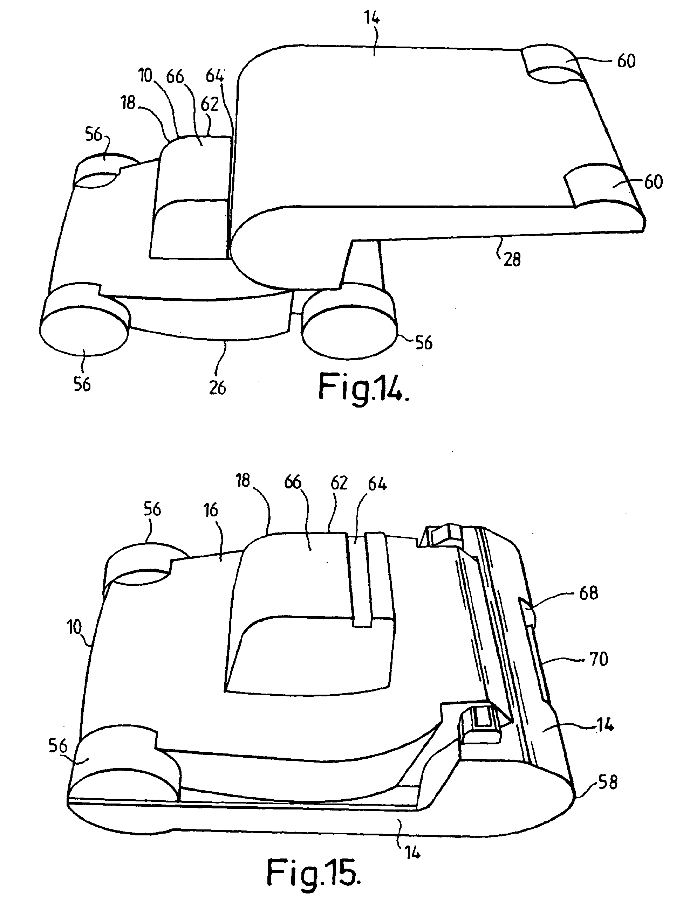

Figures 14 and 15 show the third embodiment. The third embodiment is similar to the first, and only the differences from the first embodiment will be described. The same reference numerals will be used for equivalent features.

The lawnmower 10 of the third embodiment does not have the roller 24, and instead has a wheel 56 at each corner of the deck 16. The cover 14 is pivoted to the top of the deck 16 at the rear thereof. There is no separate handle 12. Instead, the cover 14 itself forms the handle of the lawnmower 10. As the cover 14 is pivoted to the top of the deck 16, it is generally J-shaped in sideways cross-section, so that it includes a part 58 which extends downwardly from the pivot axis in the storage position. The cover 14 also includes two depressions 60 to receive the front wheels 56 of the lawnmower 10. The lawnmower has a motor casing 62 which is formed with a groove 64 in its upper surface 66. The cover 14 includes a recess 68, one side 70 of which is arranged to be received in the groove 64 in the in use position.

In each of the embodiments described above, the cover 14 defines a substantially flat surface that allows the lawnmower to be easily and safely stored on any suitable flat surface, such as the floor of a shed or garage.

In a modified embodiment (not shown), the cover is pivotally attached to the deck, and constitutes the lid of a grass collection receptacle when pivoted into the in use position. A grass bag fixed to the cover constitutes the rest of the grass collection receptacle. When the lawnmower of this modified embodiment is folded up for transport and for storage, the grass bag is contained within the enclosure defined by the cover and the deck.

## Claims

1. A lawnmower (10) having a deck (16) which presents an opening (22) to ground datum when the lawnmower is in use, a rotatable cutting member (20) housed within the deck, and a cover (14) that can be positioned substantially to close the deck opening to prevent access to the cutting member during transport and storage of the lawnmower.

2. A lawnmower as claimed in claim 1, wherein the cover (14) is an integral part of the lawnmower.

3. A lawnmower as claimed in claim 1 or claim 2, wherein the cover (14) is pivotally attached to part of the lawnmower.

4. A lawnmower as claimed in claim 3 when appendant to claim 1, wherein the cover (14) is detachably connected to said part of the lawnmower.

5. A lawnmower as claimed in claim 1, wherein the cover (14) is a separate item.

6. A lawnmower as claimed in any one of claims 3 to 5, wherein the cover (14) and said part of the lawnmower are provided with interengageable connection means (50) for detachably connecting the cover to the lawnmower for substantially closing the deck opening.

7. A lawnmower as claimed in any one of claims 3 to 6, wherein the deck (16) constitutes said part of the lawnmower.

8. A lawnmower as claimed in any one of claims 1 to 7, wherein the cover (14) and the deck (16) define an enclosure therebetween.

9. A lawnmower as claimed in any one of claims 1 to 8, further comprising a grass collection receptacle (54).

10. A lawnmower as claimed in claim 9 when appendant to claim 8, wherein the grass collection receptacle (54) is arranged to be stored in the enclosure.

11. A lawnmower as claimed in claim 10, wherein the grass collection receptacle comprises a bag (54).

12. A lawnmower as claimed in claim 9, wherein the cover (14) forms part of the grass collection receptacle.

13. A lawnmower as claimed in claim 12, wherein the cover (14) and a bag constitute the grass collection receptacle, the bag being arranged to be stored in the enclosure.

14. A lawnmower as claimed in any one of claims 8 to 13, further comprising an electric supply cable (46) which is arranged to be stored in the enclosure.

15. A lawnmower as claimed in claim 14, wherein the cover (14) is provided with retention means (44) for retaining the cable.

16. A lawnmower as claimed in claim 15, wherein the retention means is constituted by at least one projection (44) on the cover, the arrangement being such that the cable (46) can be stored in the enclosure as a coil supported by the or each projection.

17. A lawnmower as claimed in claim 15, wherein the retention means is constituted by a drum that can rotate relative to the cover, whereby the supply cable can be wound onto the drum by the simple action of rotating the drum.

18. A lawnmower as claimed in any one of claims 9 to 17, further comprising a handle (12) for pushing the lawnmower along.

19. A lawnmower as claimed in claim 18, wherein the lawnmower is such that it can be arranged in a storage position in which at least part of the handle (12) can be adjusted to lie adjacent to the cover.

20. A lawnmower as claimed in claim 18, wherein the lawnmower is such that it can be arranged in a storage position in which at least part of the handle (12) is located in a recess (34) formed in the cover (14).

21. A lawnmower as claimed in claim 18, wherein the lawnmower is such that it can be arranged in a storage position with at least part of the handle (12) stored within the enclosure.

22. A lawnmower as claimed in claim 18, wherein the lawnmower is such that it can be arranged in a storage position in which at least the majority of the handle (12) is stored within the enclosure.

23. A lawnmower as claimed in any one of claims 18 to 22, wherein the handle (12) is telescopically mounted on the lawnmower.

24. A lawnmower as claimed in claim 23, further comprising retention means for retaining the handle (12) in an extended condition.

25. A lawnmower as claimed in claim 23 or claim 24, further comprising retention means for retaining the handle (12) in at least one condition in which it is not fully extended.

26. A lawnmower as claimed in any one of claims 23 to 25, further comprising retention means for retaining the handle (12) in the fully retracted condition.

27. A lawnmower as claimed in any one of claims 1 to 26, wherein the cover (14) is movable between a first position in which it covers at least part of the deck opening (22), and a second position in which the lawnmower can be used for cutting grass.

28. A lawnmower as claimed in claim 27, wherein the arrangement is such that the cover (14) lies behind the lawnmower in the second position.

29. A lawnmower as claimed in any one of claims 1 to 28, further comprising an additional handle means (32) by which to transport or hang the lawnmower.

30. A lawnmower as claimed in claim 29, wherein the additional handle means (32) is provided on the deck (16) or on the cover (14).

31. A lawnmower as claimed in claim 30, wherein the additional handle means (32) is integrally formed with the cover (14).

32. A lawnmower as claimed in any one of claims 1 to 31, wherein the cover (14) has a substantially flat external surface.

## Patentansprüche

1. Rasenmäher (10) mit einem Deck (16), welches eine Öffnung (22) zum Bezugspunkt des Bodens aufweist, wenn der Rasenmäher verwendet wird, einem drehbaren Schneidelement (20), welches innerhalb des Decks untergebracht ist, und einer Abdeckung (14), welche angeordnet werden kann, um die Öffnung des Decks im Wesentlichen zu schließen, um während dem Transport und der Lagerung des Rasenmähers einen Zugang zum Schneidelement zu verhindern.

2. Rasenmäher nach Anspruch 1, wobei die Abdeckung (14) ein integrales Teil des Rasenmähers ist.

3. Rasenmäher nach Anspruch 1 oder 2, wobei die Abdeckung (14) schwenkbar an einem Teil des Rasenmähers angebracht ist.

4. Rasenmäher nach Anspruch 3, wenn zu Anspruch 1 zugehörig, wobei die Abdeckung (14) mit dem Teil des Rasenmähers lösbar verbunden ist.

5. Rasenmäher nach Anspruch 1, wobei die Abdeckung (14) ein separates Element ist.

6. Rasenmäher nach einem der Ansprüche 3 bis 5, wobei die Abdeckung (14) und das Teil des Rasenmähers mit miteinander eingreifbaren Verbindungseinrichtungen (50) zum lösbaren Verbinden der Abdeckung am Rasenmäher zum wesentlichen Schließen der Decköffnung versehen sind.

7. Rasenmäher nach einem der Ansprüche 3 bis 6, wobei das Deck (16) einen Teil des Rassenmähers bildet.

8. Rasenmäher nach einem der Ansprüche 1 bis 7, wobei die Abdeckung (14) und das Deck (16) ein Gehäuse zwischen denselben definieren.

9. Rasenmäher nach einem der Ansprüche 1 bis 8, welcher zudem einen Grassammelbehälter (54) aufweist.

10. Rasenmäher nach Anspruch 9, wenn zu Anspruch 8 zugehörig, wobei der Grassammelbehälter (54) vorgesehen ist, im Gehäuse untergebracht zu werden.

11. Rasenmäher nach Anspruch 10, wobei der Grassammelbehälter einen Sack (54) aufweist.

12. Rasenmäher nach Anspruch 9, wobei die Abdeckung (14) einen Teil des Grassammelbehälters bildet.

13. Rasenmäher nach Anspruch 12, wobei die Abdeckung (14) und ein Sack den Grassammelbehälter bilden, wobei der Sack vorgesehen ist im Gehäuse untergebracht zu werden.

14. Rasenmäher nach einem der Ansprüche 8 bis 13, welcher zudem ein elektrisches Versorgungskabel (46) aufweist, welches vorgesehen ist im Gehäuse untergebracht zu werden.

15. Rasenmäher nach Anspruch 14, wobei die Abdeckung (14) mit einer Halteeinrichtung (44) zum Halten des Kabels versehen ist.

16. Rasenmäher nach Anspruch 15, wobei die Halteeinrichtung durch mindestens einen Vorsprung (44) auf der Abdeckung gebildet ist, wobei die Anordnung derart ist, dass das Kabel (46) im Gehäuse als Spule untergebracht werden kann, welche durch den oder jeden Vorsprung getragen wird.

17. Rasenmäher nach Anspruch 15, wobei die Halteeinrichtung durch eine Trommel gebildet ist, welche sich relativ zur Abdeckung drehen kann, wodurch das Versorgungskabel durch den einfachen Vorgang des Drehens der Trommel auf die Trommel aufgewickelt werden kann.

18. Rasenmäher nach einem der Ansprüche 9 bis 17, welcher zudem einen Griff (12) zum vor sich her Schieben des Rasenmähers aufweist.

19. Rasenmäher nach Anspruch 18, wobei der Rasenmäher derart ist, dass er in einer Lagerstellung vorgesehen werden kann, in welcher mindestens ein Teil des Griffes (12) eingestellt werden kann an die Abdeckung angrenzend zu liegen.

20. Rasenmäher nach Anspruch 18, wobei der Rasenmäher derart ist, dass er in einer Lagerstellung vorgesehen werden kann, in welcher sich mindestens ein Teil des Griffes (12) in einer in der Abdeckung (14) gebildeten Aussparung (34) befindet.

21. Rasenmäher nach Anspruch 18, wobei der Rasenmäher derart ist, dass er in einer Lagerstellung vorgesehen werden kann, wobei mindestens ein Teil des Griffes (12) innerhalb des Gehäuses untergebracht ist.

22. Rasenmäher nach Anspruch 18, wobei der Rasenmäher derart ist, dass er in einer Lagerstellung vorgesehen werden kann, in welcher mindestens die Mehrheit des Griffes (12) innerhalb des Gehäuses untergebracht ist.

23. Rasenmäher nach einem der Ansprüche 18 bis 22, wobei der Griff (12) teleskopisch auf dem Rasenmäher montiert ist.

24. Rasenmäher nach Anspruch 23, welcher zudem eine Halteeinrichtung zum Halten des Griffes (12) in einem ausgefahrenen Zustand aufweist.

25. Rasenmäher nach Anspruch 23 oder 24, welcher zudem eine Halteeinrichtung zum Halten des Griffes (12) in mindestens einem Zustand aufweist, in welchem er nicht vollständig ausgefahren ist.

26. Rasenmäher nach einem der Ansprüche 23 bis 25, welcher zudem eine Halteeinrichtung zum Halten des Griffes (12) in einem vollständig eingefahrenen Zustand aufweist.

27. Rasenmäher nach einem der Ansprüche 1 bis 26, wobei die Abdeckung (14) zwischen einer ersten Stellung, in welcher sie mindestens einen Teil der Decköffnung (22) bedeckt, und einer zweiten Stellung beweglich ist, in welcher der Rasenmäher zum Schneiden von Gras verwendet werden kann.

28. Rasenmäher nach Anspruch 27, wobei die Anordnung derart ist, dass die Abdeckung (14) in der zweiten Stellung hinter dem Rasenmäher liegt.

29. Rasenmäher nach einem der Ansprüche 1 bis 28, welcher zudem eine zusätzliche Griffeinrichtung (32) aufweist, durch welche der Rasenmäher transportiert oder aufgehängt werden kann.

30. Rasenmäher nach Anspruch 29, wobei die zusätzliche Griffeinrichtung (32) auf dem Deck (16) oder auf der Abdeckung (14) vorgesehen ist.

31. Rasenmäher nach Anspruch 30, wobei die zusätzliche Griffeinrichtung (32) mit der Abdeckung (14) einstückig gebildet ist.

32. Rasenmäher nach einem der Ansprüche 1 bis 31, wobei die Abdeckung (14) eine im Wesentlichen flache Außenfläche aufweist.

## Revendications

1. Tondeuse à gazon (10) comprenant un châssis (16) qui présente une ouverture (22) orientée vers le sol de référence lorsque la tondeuse à gazon est en cours d'utilisation, un élément de coupe rotatif (20) logé à l'intérieur du châssis, et un capot (14) pouvant être positionné sensiblement de telle manière à fermer l'ouverture du châssis afin d'empêcher tout accès à l'élément de coupe pendant le transport et le rangement de la tondeuse à gazon.

2. Tondeuse à gazon selon la revendication 1, dans laquelle le capot (14) fait partie intégrante de la tondeuse à gazon.

3. Tondeuse à gazon selon la revendication 1 ou la revendication 2, dans laquelle le capot (14) est fixé de manière pivotante à une partie de la tondeuse à gazon.

4. Tondeuse à gazon selon la revendication 3 lorsqu'elle est dépendante de la revendication 1, dans laquelle le capot (14) est relié de manière amovible à ladite partie de la tondeuse à gazon.

5. Tondeuse à gazon selon la revendication 1, dans laquelle le capot (14) est un élément séparé.

6. Tondeuse à gazon selon l'une quelconque des revendications 3 à 5, dans laquelle le capot (14) et ladite partie de la tondeuse à gazon sont pourvus de moyens de liaison coopérants (50) prévus pour relier de manière amovible le capot à la tondeuse à gazon pour fermer sensiblement l'ouverture du châssis.

7. Tondeuse à gazon selon l'une quelconque des revendications 3 à 6, dans laquelle le châssis (16) constitue ladite partie de la tondeuse à gazon.

8. Tondeuse à gazon selon l'une quelconque des revendications 1 à 7, dans laquelle le capot (14) et le châssis (16) définissent un compartiment entre eux.

9. Tondeuse à gazon selon l'une quelconque des revendications 1 à 8, comprenant en outre un réceptacle de ramassage d'herbe (54).

10. Tondeuse à gazon selon la revendication 9 lorsqu'elle est dépendante de la revendication 8, dans laquelle le réceptacle de ramassage d'herbe (54) est configuré pour être logé dans le compartiment.

11. Tondeuse à gazon selon la revendication 10, dans laquelle le réceptacle de ramassage d'herbe comprend un sac (54).

12. Tondeuse à gazon selon la revendication 9, dans laquelle le capot (14) fait partie du réceptacle de ramassage d'herbe.

13. Tondeuse à gazon selon la revendication 12, dans laquelle le capot (14) et un sac constituent le réceptacle de ramassage d'herbe, le sac étant prévu de telle manière à pouvoir être logé dans le compartiment.

14. Tondeuse à gazon selon l'une quelconque des revendications 8 à 13, comprenant en outre un câble d'alimentation électrique (46) qui est prévu de telle manière à pouvoir être logé dans le compartiment

15. Tondeuse à gazon selon la revendication 14, dans laquelle le capot (14) est pourvu d'éléments de retenue (44) pour retenir le câble.

16. Tondeuse à gazon selon la revendication 15, dans laquelle les éléments de retenue sont constitués par au moins une saillie (44) sur le capot, la configuration étant telle que le câble (46) peut être logé dans le compartiment sous forme d'enroulement supporté par la ou chaque saillie.

17. Tondeuse à gazon selon la revendication 15, dans laquelle les éléments de retenue sont constitués par un tambour qui peut tourner par rapport au capot, de sorte que le câble d'alimentation peut être enroulé sur le tambour par simple action de rotation du tambour.

18. Tondeuse à gazon selon l'une quelconque des revendications 9 à 17, comprenant en outre un guidon (12) afin de pousser celle-ci.

19. Tondeuse à gazon selon la revendication 18, dans laquelle la tondeuse à gazon est telle qu'elle peut être disposée dans une position de rangement dans laquelle au moins une partie du guidon (12) peut être réglée pour reposer de manière adjacente au capot.

20. Tondeuse à gazon selon la revendication 18, dans laquelle la tondeuse à gazon est telle qu'elle peut être disposée dans une position de rangement dans laquelle au moins une partie du guidon (12) est située dans un évidement (34) ménagé dans le capot (14).

21. Tondeuse à gazon selon la revendication 18, dans laquelle la tondeuse à gazon est telle qu'elle peut être disposée dans une position de rangement avec au moins une partie du guidon (12) logé à l'intérieur du compartiment.

22. Tondeuse à gazon selon la revendication 18, dans laquelle la tondeuse à gazon est telle qu'elle peut être disposée dans une position de rangement dans laquelle au moins la plus grande partie du guidon (12) est logée à l'intérieur du compartiment.

23. Tondeuse à gazon selon l'une quelconque des revendications 18 à 22, dans laquelle le guidon (12) est monté de manière télescopique sur la tondeuse à gazon.

24. Tondeuse à gazon selon la revendication 23, comprenant en outre des éléments de retenue pour retenir le guidon (12) dans une position d'extension.

25. Tondeuse à gazon selon la revendication 23 ou la revendication 24, comprenant en outre des éléments de retenue pour retenir le guidon (12) dans au moins un état dans lequel il n'est pas entièrement étendu.

26. Tondeuse à gazon selon l'une quelconque des revendications 23 à 25, comprenant en outre des éléments de retenue pour retenir le guidon (12) dans l'état de rétraction maximale.

27. Tondeuse à gazon selon l'une quelconque des revendications 1 à 26, dans laquelle le capot (14) peut être déplacé entre une première position dans laquelle il couvre au moins une partie de l'ouverture de châssis (22), et une seconde position dans laquelle la tondeuse à gazon peut être utilisée pour couper l'herbe.

28. Tondeuse à gazon selon la revendication 27, dans laquelle la configuration est telle que le capot (14) est disposé en partie arrière de la tondeuse à gazon dans la seconde position.

29. Tondeuse à gazon selon l'une quelconque des revendications 1 à 28, comprenant en outre des éléments de saisie supplémentaires (32) au moyen desquels la tondeuse à gazon peut être transportée ou suspendue.

30. Tondeuse à gazon selon la revendication 29, dans laquelle les éléments de saisie supplémentaires (32) sont prévus sur le compartiment (16) ou sur le capot (14).

31. Tondeuse à gazon selon la revendication 30, dans laquelle les éléments de saisie supplémentaires (32) font partie intégrante du capot (14).

32. Tondeuse à gazon selon l'une quelconque des revendications 1 à 31, dans laquelle le capot (14) présente une surface extérieure sensiblement plate.
